(19) **Europäisches Patentamt**
**European Patent Office**
**Office européen des brevets**

(11) **EP 4 741 034 A1**

(12) **EUROPEAN PATENT APPLICATION**

(43) Date of publication:
**13.05.2026 Bulletin 2026/20**

(21) Application number: **24211769.5**

(22) Date of filing: **08.11.2024**

(51) International Patent Classification (IPC):
**B01D 39/16** *(2006.01)* **B01D 39/20** *(2006.01)*

(52) Cooperative Patent Classification (CPC):
**B01D 39/1615; B01D 39/1623; B01D 39/2017;**
**B01D 39/2082; B01D 46/0001;** B01D 2239/0233;
B01D 2239/0464; B01D 2239/086; B01D 2239/10

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(71) Applicant: **Neenah Gessner GmbH**
**83052 Bruckmühl (DE)**

(72) Inventors:
• **Fritze, Urs Fabian**
**83052 Bruckmühl (DE)**
• **Hörl, Werner**
**83052 Bruckmühl (DE)**

(74) Representative: **Hoffmann Eitle**
**Patent- und Rechtsanwälte PartmbB**
**Arabellastraße 30**
**81925 München (DE)**

Remarks:
Amended claims in accordance with Rule 137(2)
EPC.

(54) **FILTRATION MEDIUM**

(57) This invention relates to a filtration medium, more particularly, to a filtration medium comprising at leastone layer and a resin binder composition comprisinga lignin modified phenolic resin such as may be used for filtering fluids in automotive, industrial and domestic applications. It also relates to a filter element comprising the filter medium, a paper, methods of preparing the filter medium and element, and use of the filter medium or element.

**Description**

**FIELD OF THE INVENTION**

This invention relates to a filtration medium, more particularly, to a filtration medium comprising at least one layer and a resin binder composition comprising a lignin modified phenolic resin such as may be used for filtering fluids in automotive, industrial and domestic applications. It also relates to a filter element comprising the filter medium, a paper, methods of preparing the filter medium and element, and use of the filter medium or element.

**BACKGROUND TO THE INVENTION**

Improving the sustainability of products is one of the key challenges of our time.
Many products are currently made using components derived from petroleum. Partly replacing such components with those derived from renewable sources is one way among many of improving the sustainability of the product. However, partly replacing existing products using components derived from renewable sources is a significant challenge. This is because existing products are normally highly optimized based on the components derived from petroleum - making it difficult to produce a new product using renewable sources yet achieving the same balance of properties.
Filter media are used in automotive, industrial and domestic applications to remove undesirable materials (i.e. particles) from a liquid or gas by passing the liquid or gas through the filter media.
Due to the increasing pollution of the ambient air with fine dust and soot, the requirements for the degree of separation of filter materials and filter elements made from them are constantly increasing, e.g. in the fields of ventilation and air conditioning technology for buildings and vehicle interiors or for the air supply of internal combustion engines. These filter media, especially in the automotive sector, must be stable against the corresponding environment, such as air, water, fuels, or oils. For this purpose, layers are impregnated with binders. Before employment of the filter media, a chemical cross linking of the binder is usually carried out.
Efforts have also been made to make filters having improved sustainability (see WO2022008614A1). However, for the reasons laid out above, it is a significant challenge to replace the existing filters with increased components derived from renewable sources without sacrificing the filter properties. Accordingly, there remains a need for a filter medium with improved sustainability that can be used in the field of fluid filtration, and more specifically in the field of air filtration.

**TECHNICAL PROBLEM**

Therefore, it is an objective of the present invention to provide a filter medium with improved sustainability that can be used in the field of fluid filtration, and more specifically in the field of air filtration. It is also an objective to provide a filter element comprising the filter medium, or a paper. An objective is also to provide methods of preparing the filter medium and element, and use of the filter medium or element.

**SUMMARY OF THE INVENTION**

The present invention solves the above problems by providing a filter medium comprising: at least one layer and a resin binder composition, wherein the resin binder composition comprises a lignin modified phenolic resin, wherein when the filter medium is subjected to the leaching test, it loses:
2.5% or less by mass relative to the total mass of the filter medium prior to the test; and/or 10% or less by mass relative to the total mass of the resin binder composition prior to the test. The use of the lignin modified phenolic resin means that the filter medium has improved sustainability, and excellent properties in the field of fluid filtration, and more specifically in the field of air filtration. These properties are comparable to those of existing filter media with lower sustainability.
The present invention also relates to a filter element comprising the filter medium, or a paper, as well as methods of preparing the filter medium and element, and use of the filter medium or element.
The present invention encompasses the following embodiments.

　　1. A filter medium comprising:

　　　　at least one layer and a resin binder composition,
　　　　wherein the resin binder composition comprises a lignin modified phenolic resin,
　　　　wherein when the filter medium is subjected to the leaching test, it loses:

　　　　　　2.5% or less by mass relative to the total mass of the filter medium prior to the test; and/or
　　　　　　10% or less by mass relative to the total mass of the resin binder composition prior to the test.

2. The filter medium according to embodiment 1,

a) wherein the at least one layer is fibrous and optionally comprises 10 to 100% by weight of natural fibers and 0 to 90% by weight of synthetic and/or inorganic fibers, based on the total weight of the fibers in the layer, optionally wherein the synthetic fibers are polyester fibers, and/or
b) wherein the filter medium comprises 5 to 40% by weight of the resin binder composition, based on the total weight of the filter medium.

3. The filter medium according to any previous embodiment, wherein the at least one layer is a wet-laid layer.

4. The filter medium according to any previous embodiment, wherein the at least one layer has a full-life efficiency equal to or higher than 90.00%.

5. The filter medium according to any previous embodiment, wherein

i) the amount of formaldehyde released is less than 0.1 g/kg; and/or
ii) the bursting strength is 140-1000kPa; and/or
iii) the bursting strength after 24h at 160°C is 130 - 1000 kPa; and/or
iv) the air permeability is 3 - 800 L/(m²s); and/or
v) the flame retardant classification of F1 is achieved with DIN53438 1984 both before and after the leaching test.

6. The filter medium of any previous embodiment, wherein the lignin modified phenolic resin is obtained by reacting together phenol, formaldehyde, and lignin.

7. The filter medium of embodiment 6,

i) wherein the lignin has a density of 1.25 - 1.45 g/cm$^3$; and/or
ii) wherein the lignin is present in the reaction in an amount of greater than 15% by mass based on the total mass of the phenol, formaldehyde, and lignin.

8. The filter medium of any previous embodiment, wherein the filter medium is obtained by contacting the at least one layer with the resin binder composition, optionally wherein:

i) in the contacting step the resin binder composition comprises in addition to the lignin modified phenolic resin at least one of a solvent, a crosslinking agent, a polymer based on acrylic esters, and a flame retardant; and/or
ii) a drying step is carried out after the contacting step; and/or
iii) a curing step is carried out after the contacting step and/or the drying step.

9. The filter medium according to any previous embodiment, wherein the lignin modified phenolic resin

i) has a viscosity at 20°C of 250 - 600 mPas; and/or
ii) has a content of free formaldehyde of less than 0.1 mass% on the basis of the lignin modified phenolic resin; and/or
iii) has a content of free phenol of less than 2 mass% on the basis of the lignin modified phenolic resin; and/or
iv) has a B-transformation time at 130°C of 3 - 8 minutes; and/or
v) has a weight average molecular weight of 500 - 5000 g/mol; and/or
vi) has a number average molecular weight of 150 - 350 g/mol; and/or
vii) has a molecular weight distribution of 5 - 12.

10. A filter element comprising the filter medium according to any of the previous embodiments.

11. A paper comprising a resin binder composition,

wherein the resin binder composition comprises a lignin modified phenolic resin, and wherein when the paper is subjected to the leaching test, it loses:
2.5% or less by mass relative to the total mass of the paper prior to the test; and/or 10% or less by mass relative to the total mass of the resin binder composition prior to the test.

12. A method of preparing a filter medium according to any of embodiments 1-9, comprising the steps of

i) contacting the at least one layer with the resin binder composition comprising the lignin modified phenolic resin; and
ii) optionally drying the contacted layer; and/or
iii) optionally curing the contacted layer.

13. The method of preparing a filter medium according to embodiment 12, further comprising the step of reacting together phenol, formaldehyde, and lignin to obtain the lignin modified phenolic resin.

14. A method of preparing a filter element according to embodiment 10, comprising introducing the filter medium according to any of embodiments 1- 9 into a filter unit.

15. Use of the filter medium or filter element according to any of embodiments 1 - 10 for air filtration.

## Detailed Description of the Invention

Where the present description refers to preferred embodiments/features including all levels of preference, combinations of these preferred embodiments/features shall also be deemed as disclosed, as long as this combination of preferred embodiments/features is technically meaningful.

Herein, the use of the term "comprising" or "including" should be understood as disclosing, as a more restricted embodiment, the term "consisting of" as well, as long as this is technically meaningful.

If preferred upper and lower limits are indicated for certain features, this should be understood as disclosing any combination of the upper and lower limits.

In the sense of the present invention, the feature "at least one" preferably refers to one to five, more preferably to one to three, and most preferably to one.

## RESIN BINDER COMPOSITION

The resin binder composition comprises a lignin modified phenolic resin. It is preferred that the lignin modified phenolic resin is the only resin comprised in the resin binder composition and filter medium.

Lignin is a class of complex organic polymers that form key structural materials in the support tissues of most plants. The lignin modified phenolic resin has an extremely complicated structure, which cannot be characterised. Without wishing to be bound by theory, it is postulated that the complex structure arises because lignin itself has an extremely complex structure and can react with phenol and formaldehyde in the formation of a lignin modified phenolic resin in a variety of ways, leading to a large structural diversity. As the structure of the lignin modified phenolic resin cannot be defined, the invention can only be described using the leaching test parameter.

The lignin modified phenolic resin may be obtained by reacting together phenol, formaldehyde, and lignin. In the invention phenol refers to CeHsOH. Formaldehyde means $CH_2=O$ or a source thereof such as paraformaldehyde or formalin. These components are reacted together, meaning that each of these components takes part in the same reaction and are covalently reacted together to form the lignin modified phenolic resin. In other words, the lignin modified phenolic resin of the invention contains covalent bonds between elements originating from phenol, formaldehyde and lignin.

Without wishing to be bound by theory, it is postulated that lignin modified phenolic resin obtained by reacting together phenol, formaldehyde, and lignin may deliver particularly improved leaching properties. This may be because it is formed by reacting the individual constituent units of lignin modified phenolic resin, i.e. phenol, formaldehyde, and lignin. This delivers covalent bonding between the lignin, formaldehyde and phenol molecules, making it less likely that resin is lost in the leaching test.

This can be contrasted with phenolic resins containing lignin not according to the invention which are obtained by reacting together phenol and formaldehyde to form phenolic resin in a first reaction, with subsequent mixing of the phenolic resin with lignin. Such phenolic resins containing lignin are disclosed in WO2022008614A1. This means that there is no covalent bonding between the lignin and other components, meaning that more resin is lost in the leaching test.

Similar considerations apply to resins which are formed by first mixing formaldehyde and lignin to form hydroxymethylated lignin and lignin resins. In this case, many of the reaction sites on the lignin have already been taken up in reactions with formaldehyde to create the hydroxymethylated lignin and lignin resin. As a result, there are fewer sites at which the phenol can bond to the lignin, meaning that there is less covalent bonding between these components. As a result, it is more likely that resin is lost in the leaching test. In the invention the lignin modified phenolic resin may be obtained by reacting together phenol, formaldehyde, and lignin, wherein the lignin has not previously been reacted with formaldehyde and/or has not been hydroxymethylated and/or no lignin resin is present in the starting material.

Similar considerations apply to resins which are formed by first mixing phenol and lignin with subsequent addition of the formaldehyde. In this case, it may be difficult to efficiently mix the formaldehyde into the phenol and lignin mixture. As a result, less covalent bonding between lignin and phenol may ultimately occur. As a result, it is more likely that resin is lost in the leaching test. In the invention the lignin modified phenolic resin may be obtained by reacting together phenol, formaldehyde, and lignin, wherein the lignin has not previously been mixed with phenol in the absence of formaldehyde in the starting material.

In the invention, the lignin modified phenolic resin may be obtained by reacting together phenol, formaldehyde, and lignin.

When reacting together phenol, formaldehyde, and lignin in the invention, the lignin preferably has a density of 1.25 - 1.45 $g/cm^3$, preferably 1.30 - 1.35 $g/cm^3$. This is measured using the lignin before the reaction. The lignin is dried at 105°C for 24 hours at atmospheric pressure. The density is then measured using Helium in a Pyknometer according to DIN 66137-2:2019-03.

In the invention the lignin may be present in the reaction in an amount of greater than 15% by mass, preferably greater than 25% by mass, preferably greater than 35%, preferably 50% or greater by mass based on the total mass of the phenol, formaldehyde, and lignin in the reaction. Similarly, the lignin may be present in the lignin modified phenolic resin in an amount of greater than 15% by mass, preferably greater than 25% by mass, preferably greater than 35%, preferably 50% or greater by mass based on the dry weight of the lignin modified phenolic resin.

The lignin may be obtained for example from the Kraft process. As is well known in the art, the Kraft process (also known as Kraft pulping or the sulphate process) is a process for converting wood into cellulose fiber pulp. The process involves treating wood chips with a hot mixture of water, sodium hydroxide (NaOH), and sodium sulfide ($Na_2S$), to cleave bonds between lignin, hemicellulose, and cellulose. The method includes several mechanical and chemical steps, which result in the formation of two product streams: a cellulose fiber stream and a lignin stream. The wood used in the Kraft process from which the lignin is obtained can be a softwood (i.e. from gymnosperm trees such as conifers, e.g. pines), a hardwood (i.e from angiosperm trees), or a combination thereof. The lignin obtained from the Kraft process represents a renewable source of resin which has a lower environmental impact than resin obtained from oil-based hydrocarbon sources. Since the Kraft lignin is a by-product of the Kraft process, minimal processing is required to obtain it.

As explained above, preferably the lignin has not been hydroxymethylated. Also, preferably the lignin is obtained from renewable sources. Preferably, lignin is not artificial lignin obtained from petroleum. Lignin obtained from renewable sources can be differentiated from that obtained from petroleum by the carbon isotope ratios using ASTM International Radioisotope Standard Method D 6866-21. Lignin obtained from renewable sources means the carbon content is derived from renewable sources as shown by ASTM D 6866-21.

It is preferred that the lignin does not comprise cellulose or hemicellulose. Similarly, it is preferred that the lignin is not comprised in black liquor. The lignin may be present as a lignosulfonate, but it is preferred that the lignin is not a lignosulfonate.

The lignin modified phenolic resin may

i) have a viscosity at 20°C of 250 - 600 mPas, preferably 300 - 500 mPas, preferably 350 - 420 mPas, preferably 380 mPas when measured using EN ISO 12058-1:2018; and/or
ii) have a content of free formaldehyde of less than 0.1 mass% on the basis of the lignin modified phenolic resin when measured using EN ISO 11402:2006; and/or
iii) have a content of free phenol of less than 2 mass%, preferably less than 1.9 mass% on the basis of the lignin modified phenolic resin when measured using EN ISO 8974:2002; and/or
iv) have a B-transformation time at 130°C of 3 - 8 minutes, preferably 6 - 8 minutes, preferably 7 - 7.5 minutes when measured using EN ISO 8987:2007 Met. A; and/or
v) have a weight average molecular weight of 500 - 5000 g/mol, preferably 1000 - 3000 g/mol, preferably 2000 - 3000 g/mol when measured using GPC as defined below; and/or
vi) have a number average molecular weight of 150 - 350 g/mol, preferably 180 - 320 g/mol, preferably 250 - 300 g/mol when measured using GPC as defined below; and/or
vii) have a molecular weight distribution of 5 - 12, preferably 7 - 11, preferably 9 - 10 when measured using GPC as defined below; and/or
viii) have a dry weight in methanol of 50 - 70%, preferably 55-65%, preferably 58% when measured after heating 3 g for 1 hour at 135°C according to EN ISO 3251:2019. As such, the properties i) to vii) above may be for the lignin modified phenolic resin having these dry weights in methanol.

In a preferred embodiment, the lignin modified phenolic resin

i) has a viscosity at 20°C of 350 - 420 mPas when measured using EN ISO 12058-1:2018; and/or
ii) has a content of free formaldehyde of less than 0.1 mass% on the basis of the lignin modified phenolic resin when measured using EN ISO 11402:2006; and/or

iii) has a content of free phenol of less than 1.9 mass% on the basis of the lignin modified phenolic resin when measured using EN ISO 8974:2002; and/or

iv) has a B-transformation time at 130°C of 7 - 7.5 minutes when measured using EN ISO 8987:2007 Met. A; and/or

v) has a weight average molecular weight of 2000 - 3000 g/mol when measured using GPC as defined below; and/or

vi) has a number average molecular weight of 250 - 300 g/mol when measured using GPC as defined below; and/or

ix) has a molecular weight distribution of 9 - 10 when measured using GPC as defined below; and/or

vii) have a dry weight in methanol of 58% when measured after heating 3 g for 1 hour at 135°C according to EN ISO 3251:2019.

In addition to the lignin modified phenolic resin, the resin binder composition may also comprise one or more binders selected from phenolic resins, epoxy resins, acrylates, styrene butadiene, polyvinyl acetates, polyurethanes, phenolic resins, polyvinyl alcohol, melamine resin, urea-formaldehyde resin, and solid, powdery binders of thermoplastic polymers. It is preferred that the resin binder composition does not comprise epoxy resins.

The resin binder composition may also comprise one or more components selected from a solvent, crosslinking agent, polymer based on acrylic esters, flame retardant (as defined in more detail below), dyes, thickeners, antifoams, plasticizers, pigments, wetting agents, and fillers. Preferably, the resin binder composition comprises a mixture of the lignin modified phenolic resin with at least one of a solvent (preferably water or an organic solvent or a mixture thereof, preferably wherein the organic solvent is an alcohol such as ethanol or methanol, and more preferably methanol and most preferably a methanol-water mixture), a crosslinking agent, a polymer based on acrylic esters, and a flame retardant.

In a preferred embodiment, the lignin modified phenolic resin is PF-22 EKO obtained from Lerg SA.

## LAYER

A layer is a sheet of material.

The layer is a material with which the resin binder composition can be contacted, e.g. impregnated and/or coated, to form a filter medium.

The filter medium of the present invention may contain one to five layers in addition to the at least one layer, more preferably from one to four layers in addition to the at least one layer, more preferably from one to three layers in addition to the at least one layer, more preferably from one to two layers in addition to the at least one layer. Most preferably, the filter medium of the present invention consists of one layer. Where multiple layers are present, they may be the same or different.

The at least one layer may be fibrous, meaning that it comprises or consists of fibers. The at least one layer may comprise or consist of

a1) 10 to 100%, preferably 50 - 100%, preferably 80 - 100%, preferably 90 100% by weight of natural fibers, based on the total weight of the fibers in the layer,

a2) 0 to 90%, preferably 0 - 50%, preferably 0 - 20%, preferably 0 - 10%, by weight of synthetic and/or inorganic fibers, based on the total weight of the fibers in the layer.

Natural fibers are the preferred fibers in the one or more layer of the invention. Natural fibers in the invention may be one or more selected from cellulose fibers, regenerated celluloses and fibrillated celluloses. Most preferably, the natural fibers comprise or consist of cellulose fibers.

The fibers may comprise or consist of natural fibers. When the fibers comprise natural fibers, it is preferred that the natural fibers are cellulose fibers, and that the fibers also comprise or only further comprise PET fibers.

Of synthetic and inorganic fibers, synthetic fibers are preferred.

Synthetic fibers for use in the invention are one or more selected from polyester fibers, polypropylene fibers, multicomponent fibers of which the individual components have different melting points, polyamide fibers and acrylic fibers. Polyester fibers are preferred, and of these polyethylentherephthalate (PET) fibers are most preferred.

It is preferred that the polyester fibers are recycled. The at least one layer may comprise or consist of recycled polyester fibers, most preferably recycled PET fibers.

Examples of polyester fibers are polybutylentherephthalate (PBT) fibers, polyethylentherephthalate (PET) fibers and polylactic acid (PLA) fibers. Examples of multicomponent fibers are PET/CoPET bicomponent fibers having core-sheath configuration. The average fiber diameter of the synthetic fibers is typically from 3 to 30 $\mu$m, preferably 5 to 15 $\mu$m, and the cutting length is typically from 3-20 mm, preferably 4-12 mm. The synthetic fibers may comprise suitable polymers to be used for the meltblown nonwovens and spunlaid nonwovens. Such suitable polymers include, for example, polyethylene terephthalate, polybutylene terephthalate, polyamide, polyphenylene sulfide, polyolefin, and polyurethane or mixture thereof.

The polyester (preferably recycled, preferably PET, more preferably recycled PET) fibers may have 0.05 - 5 dtex, preferably 0.1 - 4 dtex, preferably 0.2 - 3 dtex.

In many applications where synthetic fibers are used, a spunlaid nonwoven comprising bicomponent fibers is advantageous. Examples of preferred multicomponent fibers are PET/CoPET bicomponent fibers having core-sheath configuration. The typical average fiber diameter for spunlaid nonwoven is 5-30 $\mu$m, preferably 10-20 $\mu$m and even more preferably 12-17 $\mu$m. The average fiber diameters for meltblown fibers are 0.5-10 $\mu$m, preferably 0.5-5 $\mu$m.

Preferably the at least one layer is combined with at least one meltblown layer. Preferably, the meltblown layer comprises polypropylene or polyester fibers.

Inorganic fibers are, for example, glass fibers, basalt fibers and quartz fibers. Preferably, the inorganic fibers are glass fibers. The average fiber diameter of the inorganic fibers is 0.1 to 15 $\mu$m, preferably 0.6 to 10 $\mu$m.

The at least one layer can be any layer selected from the group of wet-laid nonwovens, dry-laid nonwovens and foam layers. Preferably, the at least one layer is a wet-laid nonwoven.

An additional layer that can be combined with the at least one layer can be any layer selected from the group of wet-laid nonwovens, dry-laid nonwovens and foam layers.

Within the meaning of this invention, wet-laid nonwovens are all nonwovens that can be produced using wet-laying processes known to the skilled person for manufacturing filter media. Within the meaning of this invention, dry-laid nonwovens include, for example, meltblown nonwovens and spunlaid nonwovens, which can be produced according to known manufacturing methods.

The filter medium may have a pre-filter layer on one side. The pre-filter layer may comprise a melt-blown nonwoven, a spun-bonded nonwoven, a dry-laid staple fiber nonwoven, a wet-laid nonwoven, a glass-fiber nonwoven, a fabric or a foam.

The at least one layer may have a full-life efficiency equal to or higher than 90.00%, preferably equal to or higher than 95.00%, even more preferably equal to or higher than 99.00%. The full-life efficiency calculated by weight has been determined by flat sheet testing according to ISO 5011:2020(E) using Palas MFP30005. Test conditions: face velocity 11.1 cm/s, final pressure drop 2000 pa, test dust ISO 12103-1:2016, A2 fine. For the avoidance of doubt, the specified full-life efficiency applies to the filter medium according to the present invention, which is suitable for the automotive industry and specifically as an engine air or oil filter medium and any air filter that may be used in electric vehicles.

The thickness of the at least one layer may be 0.10-2.00 mm, preferably 0.10-1.00 mm and more preferably 0.17-0.50 mm, as measured according to DIN EN ISO 534:2005-05.

The air permeability of the at least one layer may be 3-2000 L/(m²s), preferably 3-1000 L/(m²s), and more preferably 90-300 L/(m²s), as measured according to DIN EN ISO 9237:1995 at a pressure difference of 200 Pa and a sample size of 20 cm² using a Textest FX3300 instrument with a 20 cm² testing head.

The basis weight of the at least one layer may be from 50-400 g/m², preferably 60-300 g/m² and more preferably 80-150 g/m².

Preferably, the diameter (size) of "many pores" according to the pore size measurement described below is between 10 and 100 $\mu$m of the at least one layer. More preferably, the diameter (size) of "many pores" according to the pore size measurement described below is between 20 and 50 $\mu$m.

Preferably, the maximum pore size (diameter) of the at least one layer is 20 to 120 $\mu$m. The pore size is measured with reference to DIN ISO 4003:1990. A sample of the layer is placed between an airtight clamp over an orifice equipped with air supply and a connection to a pressure gauge (U-tube with mm indicator). Each sample is tested with the upper side facing upwards. Denatured ethanol (ethanol 100% with 1% MEK (Methyl-Ethyl-Ketone) as denaturant) is poured over the edge of the upper specimen holder (do not spray directly onto the sample / approx.. 4mm depth) to achieve a slight excess of air pressure on the liquid. The air pressure is slowly increased (approx.. 5mm Water Guage/sec) until the first air bubble is visible. The necessary air pressure level is to be read from the pressure gauge (in mm Water Guage) and, with the help of the surface tension of the ethanol (23°C), the diameter of the largest pore ("Maximum Pore", "maximum pore size", "maximum pore diameter") can be calculated.

The air pressure is then increased further until air is passing through the sample over the entire surface (10cm²) with an even distribution of bubbles but without foaming to determine the value for "many pores". The air pressure is read off again at this point and the relative pore diameter, i.e. the diameter of "many pores" is calculated.

The "maximum pore size" and "many pores" can be calculated as described above by using the following formula:

$$d = \frac{4\,\sigma \cdot \cos\alpha}{p} \cdot 1.000000$$

d = Pore diameter [$\mu$m]

p = Air pressure [mN/m$^2$]

σ = Surface tension of the test liquid (e. g. ethanol) [Ethanol at 23°C σ = 21.330225 mN/m]

α = Contact angle at the area where the liquid and the sample meet(Conversion: 1mm Water Guage = 98.07 mN/m$^2$)

Preferably, the burst strength according to Mullen under dry conditions (with reference to DIN EN ISO 2758:2014) of the at least one layer is preferably 140 - 1000 kPA, preferably 200-500 kPa and preferably 250-500 kPa. Testing conditions: The layer was kept for 24 h at 25 °C and 50% relative humidity before measurement.

The burst strength according to Mullen under wet conditions of the at least one layer is preferably 90-500 kPa and preferably 100-500 kPa. Testing conditions: the layer is soaked for 10 minutes in distilled water (at 23°C) and then blotted between two pieces of blotting paper before measurement.

Preferably, the width related bending stiffness of the at least one layer is in the range of 200-600 cNmm. Testing conditions with reference to DIN 53 121:2014-08: The layer is conditioned for 24H at 25°C and 50% relative humidity prior to the measurement. 10 samples are taken from the machine direction and cut to a size of 15mm width and 60mm length. From each of these, half of the samples (i.e. 5 samples) are tested with the upper side towards the top and the other half with the bottom side towards the bending knife. Average of all 10 values determines the bending stiffness. Testing equipment is a Frank PTI Bending Resistance Tester type S58566. Testing speed 3°/s, angle 15°, hold time 0.5 s, preforce 0.005 N, band width 15 mm, test distance 10 mm. Average of all 10 values determines the bending stiffness.

Preferably, the dust holding capacity of the at least one layer is equal to or higher than 70 g/m$^2$, preferably equal to or higher than 80 g/m$^2$, even more preferably equal to or higher than 90 g/m$^2$, most preferably equal to or higher than 95 g/m$^2$. The dust holding capacity is determined according to ISO 5011:2020(E) using Palas MFP30005. Test conditions: face velocity 11.1 cm/s, final pressure drop 2000 pa, test dust ISO 12103-1:2016, A2 fine.

The filter medium of the present invention shows a very good redrying behavior. In order to measure the redrying behavior of the at least one layer, the at least one layer was soaked for 10 minutes in distilled water (at 23°C) and then blotted between two pieces of blotting paper. The air permeability of the so treated filter medium was then measured using a Textest FX3300 instrument with a 20 cm$^2$ testing head and a pressure difference of 200 Pa (with reference to DIN EN ISO 9237:1995). The redrying behavior is the time necessary to achieve the air permeability value of the untreated sample in the soaked sample. In other words, the following steps are necessary:

1) measurement of air permeability of the sample;

2) soaking the sample in distilled water and blotting as indicated above;

3) measurement of air permeability and determination of the time necessary to achieve the air permeability value of 1) above in the soaked sample.

It has been found that complete redrying was achieved after less than 15 min, preferably less than 10 min and even more preferably less than 8 min. For step 3) above, the sample was kept under the air flow of the instrument and the air permeability was measured over the time (i.e. 15 minutes, 10 minutes and 8 minutes).

The at least one layer can be classified as S1 according to Smolder Test which is a testing procedure according to Ford Laboratory Test Method BS 152-01. A vertically positioned sample is pierced with an IR wire (800 °C (4,5 Volt/8 Watt) or 900 °C (5 Volt/9 Watt)). To be determined is the point at which the flame extinguishes itself or burns through the sample. The sample is conditioned for 24 h at 25 °C and 50% relative humidity. The sample is marked with circles of diameter 1,2/ 3,5/ 5,0/ 7,0 cm. The test is to be conducted with the flue switched on. The IR-Wire is to be heated up for at least 2 minutes to ensure the correct temperature is reached. The hot IR-Wire is carefully pierced through the paper and then slowly withdrawn. In so doing the edges are to come into full contact with the IR-Wire.

Depending on the result, samples are to be classed in the following categories:

S1 Self-extinguishing within Circle 1 (Ø 1,2 cm)

S2 Self-extinguishing within Circle 2. (Ø 3,5 cm)

S3 Self-extinguishing within Circle 3. (Ø 5,0 cm)

S4 Did not self-extinguish within 3 minutes or self-extinguished beyond Circle.

## FILTER MEDIUM

A filter medium is a material which separates solids from a fluid (i.e. a liquid or gas) which passes through the filter medium. As such, the filter medium must allow fluids to pass through. Veneers, boards, and plywood do not allow fluids to pass through and are not filter media.

The filter medium according to the present invention is suitable for liquid and gas filtration. Preferably, the filter medium according to the present invention is suitable for air filtration. More preferably, the filter medium according to the present invention is suitable for the automotive industry and specifically as an engine air or oil filter medium and any air filter that may be used in electric vehicles. Further, the filter medium according to the present invention can be used in industrial filtration such as a pulse jet filter etc.

When the filter medium is subjected to the leaching test defined below, it loses:

2.5% or less by mass relative to the total mass of the filter medium prior to the test; and/or 10% or less by mass relative to the total mass of the resin binder composition prior to the test. As described above, the structure of the lignin modified phenolic resin cannot be defined, so the invention can only be described using this leaching test parameter. As also described above, it is postulated that lignin modified phenolic resin obtained by reacting together phenol, formaldehyde, and lignin may deliver a filter medium which, when subjected to the leaching test, loses:

2.5% or less by mass relative to the total mass of the filter medium prior to the test; and/or 10% or less by mass relative to the total mass of the resin binder composition prior to the test.

In the leaching test, the filter medium is weighed and subsequently completely submerged for 24 hours in deionized water at 25°C. The amount of water used is 5 liters per square meter of filter medium. This water is removed and replaced with the same amount, type and temperature of water at 1, 4, and 7 hours after the filter medium is first submerged. After 24 hours, the filter medium is removed from the water and dried for 1 hour at 100°C and atmospheric pressure (101325 Pascals). After drying, the mass of the filter medium is determined, and the %weight loss is calculated relative to the total mass of the filter medium prior to the test, or the total mass of the resin binder composition in the filter medium prior to the test. Prior to the test means immediately before the filter medium is submerged.

In a preferred embodiment, when the filter medium is subjected to the leaching test, it loses: 2% or less by mass relative to the total mass of the filter medium prior to the test; and/or 8% or less by mass relative to the total mass of the resin binder composition prior to the test. In a more preferred embodiment, when the filter medium is subjected to the leaching test, it loses:

1.5% or less by mass relative to the total mass of the filter medium prior to the test; and/or
6% or less by mass relative to the total mass of the resin binder composition prior to the test.

In a more preferred embodiment, when the filter medium is subjected to the leaching test, it loses:

1.25% or less by mass relative to the total mass of the filter medium prior to the test; and/or
5% or less by mass relative to the total mass of the resin binder composition prior to the test.

In a preferred embodiment, in the leaching test, prior to the beginning of the test, the filter medium has been cured at 165°C for 10 minutes.

The filter medium may contain 5 to 40% by weight of the resin binder composition, based on the total weight of the filter medium. Preferably, the filter medium contains 10 to 35%, more preferably 20 to 30% by weight of the resin binder composition, based on the total weight of the filter medium.

The filter medium is obtained by contacting the at least one layer with the resin binder composition. Contacting means that the at least one layer and the resin binder composition are brought together such that at least part of the at least one layer and the resin binder composition physically interact.

When contacting the resin binder composition with the layer, the layer may be impregnated with the resin binder composition in such a way that the composition penetrates 10% to 95%, or 50 to 80 % of the thickness of the layer and the opposite side remains free of resin binder composition. More preferably, the at least one layer is completely penetrated by the resin binder composition.

When contacting the resin binder composition with the layer, the layer may be contacted with the resin binder composition such that the composition contacts 10% to 100% of the surface area of at least one side of the layer, and preferably contacts 10% to 100% of the surface area of both sides of the layer.

When contacting the resin binder composition with the layer, the layer may be coated with the resin binder composition such that the composition coats 10% to 100% of the surface area of at least one side of the layer, and preferably coats 10% to 100% of the surface area of both sides of the layer. In this embodiment, the composition optionally does not penetrate into the layer on one or both sides of the layer.

In the contacting step the resin binder composition comprises a lignin modified phenolic resin, and may additionally comprise at least one of a solvent, a crosslinking agent, a flame retardant, and any further binder components as defined below optionally including a polymer based on acrylic esters.

The solvent is preferably water or an organic solvent or a mixture thereof, preferably wherein the organic solvent is an alcohol such as ethanol or methanol, and more preferably methanol and most preferably a methanol-water mixture. The ratio of methanol:water may be 90:10-70:30 based on the volumes of these solvents. The dry weight of the resin binder composition may be 5 - 70 mass%, preferably 10 - 20 mass% on the basis of the resin binder composition when comprising the solvent.

The crosslinking agent may or may not be present. When present, the crosslinking agent may be used in 0.1 - 5 wt%, preferably 1 - 4 wt% based on the mass of the resin binder composition. The crosslinking agent may be a polyamine such as a diamine, preferably hexamine and/or a melamine.

It is preferred that no polymer based on acrylic esters is present in the resin binder composition. Where present, they may be included in 1- 50 wt% based on the mass of the resin binder composition.

It is preferred that a drying step is carried out after the contacting step. The drying step removes some or all of the solvent. The drying step is preferably carried out by heating the layer which has been contacted with the resin binder at a temperature in the range of from 30°C below the boiling point of the solvent to 30°C above the boiling point of the solvent (both measured at 101325 Pascals) in a ventilated environment. The drying step may be carried out for 1 minute to 1 hour, preferably 5 minutes.

It is preferred that a curing step is carried out after the contacting step and/or the drying step. The curing step leads to crosslinking of the resin. The curing step may be carried out by heating the layer which has been contacted with the resin binder composition, and optionally dried, at a temperature in the range of 100 - 200°C, preferably 140 - 180°C. Preferably the curing step is carried out for 1 to 30 minutes, preferably 5 to 15 minutes. Most preferably, the filter medium of the invention is cured at 165°C for 10 minutes.

In one embodiment, the drying and curing is carried out in a single step in a floating noncontact oven with a temperature ramp from 25°C to 150°C.

The filter medium according to the invention preferably has the following properties:

i) the amount of formaldehyde released is less than 0.1 g/kg as measured according to the method defined in VDI Blatt 3862 Blatt 4 2001; and/or

ii) the bursting strength is 140-1000kPa, preferably 180 - 550kPa when measured according to Mullen under dry conditions (with reference to DIN EN ISO 2758:2014 with testing conditions: filter medium having a surface area of 7.3 cm$^2$ is kept for 24 h at 25 °C and 50% relative humidity before measurement); and/or

iii) the bursting strength after 24h at 160°C is 130 - 1000 kPa, preferably 130 - 220 kPa when measured as defined above; and/or

iv) the air permeability is 3 - 800 L/(m$^2$s), preferably 120 - 800 L/(m$^2$s), preferably 130 - 380 L/(m$^2$s) when measured according to DIN EN ISO 9237:1995 at a pressure difference of 200 Pa and a sample size of 20 cm$^2$ using a Textest FX3300 instrument with a 20 cm$^2$ testing head; and/or

v) the flame retardant classification of F1 is achieved with DIN53438 1984 both before and after the leaching test, meaning that this classification is achieved by the filter medium of the invention when this test is carried out both immediately before and immediately after the leaching test has been carried out with the filter medium; and/or

vi) a grammage of 60 g/m$^2$ - 250 g/m$^2$, preferably 90 g/m$^2$ - 240 g/m$^2$ when measured according to DIN EN ISO 536:2019; and/or

vii) a thickness of 0.2 mm - 2.2 mm, preferably 0.3 - 1.3 mm when measured according to DIN EN ISO 534:2005-05.

In a preferred embodiment, the filter medium has the most preferred properties for each of i) - viii).

These properties may be measured prior to the drying and/or curing steps, after the drying and before any curing step, or after the drying and/or curing step. The properties are preferably measured after the drying and/or curing step.

As described above, the structure of the lignin modified phenolic resin cannot be defined, so the invention can only be described using this leaching test parameter. As also described above, it is postulated that lignin modified phenolic resin obtained by reacting together phenol, formaldehyde, and lignin delivers a filter medium which obtains the results in the claims when subjected to the leaching test. Thus, should it not be possible to define the invention using the leaching test parameter, then the invention could equally relate to: a filter medium comprising at least one layer and a resin binder composition, wherein the resin binder composition comprises a lignin modified phenolic resin, wherein the lignin modified phenolic resin is obtained by reacting together phenol, formaldehyde, and lignin. Should it not be possible to define the invention using the leaching test parameter, it follows that the invention cannot be defined in any other way than using these process features.

The filter medium of the invention may also comprise a flame retardant. Preferably, the flame retardant may be a halogen-free and/or boron-free flame retardant. These may comprise at least one nitrogen-containing component and optionally at least one phosphorus-containing component. Examples of nitrogen-containing components are urea, urea compounds and guanidine compounds. Examples of phosphorus-containing components are phosphoric acid esters and salts thereof, phosphonic acid esters and salts thereof, phosphinic acid esters (phosphoric (I) acid esters) and salts thereof (e.g. 9,10-dihydro-9-oxa-10-phosphaphenanthrene 10-oxide and derivatives thereof), phosphates and polyphosphates, with phosphoric acid esters and the salts thereof as well as DOPO and the derivatives thereof being preferred.

The flame retardant may be bonded to the filter medium, preferably bonded to the at least one layer, most preferably bonded to fibers in the at least one layer. Bonding can be realized by suitable reactive groups which are contained in flame retardant, optionally in the halogen-free and boron-free flame retardant, especially in the nitrogen-containing component and/or phosphorous-containing component of the flame retardant, and preferably the nitrogen-containing component comprises suitable reactive groups. Methylol- and/or aldehyde groups are, for example, suitable as reactive groups. Suitable nitrogen-containing components which contain the reactive groups are, for example, methylol urea, methylol-melamine-formaldehyde and conversion products of urea compounds, guanidine compounds or dicyandiamide with multi-functional compounds such as glyoxal or glutardialdehyde. In a solvent, for example methanol or water, the flame retardant can be sprayed onto the filter material as a solution or dispersion. During evaporation of the solvent, a bond is formed between the flame retardant and the fiber surface of the fibers contained in the filter material and/or layer.

In one aspect the filter medium according to the invention may have a first side and a second, opposing side, characterised in that the two opposing sides of the filter medium are impregnated with two different binders in such a way that the first side of the filter medium has a higher surface energy and thus a shorter drop absorption time than the second, opposing side, wherein a resin binder composition comprising a lignin modified phenolic resin according to the invention is impregnated on at least one of the sides, and wherein when the filter medium is subjected to the leaching test, it loses:

2.5% or less by mass relative to the total mass of the filter medium prior to the test; and/or
10% or less by mass relative to the total mass of the resin binder composition prior to the test.

The drop absorption time is measured using methanol-water mixtures according to AATCC 118:2020 (American Association of Textile Chemists and Colorists). The volume ratios of methanol and distilled water are selected according to the surface energy of the filter material in such a way that differences in the drop absorption time can be identified between the two sides.

In this aspect, preferably the drop absorption time of the first side is at most 80 % of the drop absorption time of the second side. Preferably, the drop absorption time of the first side is at most 50 % of the drop absorption time of the second side.

Also in this aspect, at least one of the two different binders may penetrate the filter medium to at least halfway and at most three-quarters of the way through the thickness thereof. Alternatively, at least one of the two different binders fully penetrates the filter medium.

Preferably in this aspect, the binder of the first side of the filter medium having the shorter drop absorption time comprises a halogen-free and silicone-free polymer dispersion, a polyvinyl alcohol, a melamine formaldehyde resin, a urea-formaldehyde resin, a hydrophilic phenolic resin, a hydrophilic epoxy resin, or a mixture thereof. The binder may contain at least 0.01 - 5 wt.% of an additive for increasing the surface energy, characterised in that the additive may be crosslinked with the binder of the first side or is insoluble in the fluids used for the filtration.

In this aspect of the invention, the binder of the second side of the filter medium having the longer drop absorption time and thus the lower surface energy may comprise a halogen-containing polymer dispersion, a silicone-containing polymer dispersion, a polyvinyl chloride resin, a polyvinylidene chloride resin, a polyvinylidene fluoride resin, a silicone resin, a phenolic resin, an epoxy resin, or a mixture thereof. The binder of the second side may contain from 0.01 - 10 wt.% of an additive for reducing the surface energy. The additive may be crosslinked with the binder of the second side or may be insoluble in the fluids used for the filtration.

In this aspect of the invention, there is also provided a filter medium combination comprising a filter medium according to any of the preceding claims, characterised in that at least one side of the filter medium has a further non-woven layer. The filter medium combination may be characterised in that the further non-woven layer comprises a meltblown non-woven or a spunlaid non-woven which has a grammage of from 10 $g/m^2$ - 150 $g/m^2$, a thickness of from 0.1 mm - 1.0 mm, and an air permeability of from 10 $L/(m^2s)$ - 2000 $L/(m^2s)$. Alternatively, the further non-woven layer may comprise a drylaid staple fiber non-woven which has a grammage of from 50 $g/m^2$ - 250 $g/m^2$ , a thickness of from 0.3 mm - 2.0 mm, and an air permeability of from 50 $L/(m^2s)$ - 3000 $L/(m^2s)$. The grammage is measured according to DIN EN ISO 536:2019, the thickness is measured according to DIN EN ISO 534:2005-05, and the air permeability measurement method is defined above. The filter medium combination may be characterised in that the further non-woven layer is on the side having the longer drop absorption time, or it may be characterised in that the further non-woven layer is on the side having the shorter drop absorption time.

In another aspect of the invention the filter medium and/or layer may be impregnated on one side with the resin binder composition wherein the resin binder composition comprises a lignin modified phenolic resin, wherein when the filter medium is subjected to the leaching test, it loses:

2.5% or less by mass relative to the total mass of the filter medium prior to the test; and/or
10% or less by mass relative to the total mass of the resin binder composition prior to the test, wherein the filter medium in this aspect of the invention is characterised in that the filter medium comprises one side not impregnated with the binder which contains a halogen-free and boron-free flame retardant.

In this aspect of the invention the filter medium may be characterised in that the halogen-free and boron-free flame retardant is bound to the fibers present in the filter medium and/or layer. The halogen-free and boron-free flame retardant may have poor solubility in water. Within the meaning of the invention, poorly soluble means that the solubility of the flame retardant in distilled water of 20° C is preferably no more than 3.5 wt. %, particularly preferably no more than 3.0 wt. % and very particularly preferably no more than 2.5 wt. %, relative to 100 wt. % of the sum from the weight of the water and the flame protection means.

The halogen-free and boron-free flame retardant may comprise at least one nitrogen-containing component and optionally one phosphorus-containing component optionally as defined above, wherein the nitrogen-containing component is bound to the fibers. The filter medium comprises at least one medium selected from the group consisting of wet-laid nonwovens, dry-laid nonwovens and foams. The resin binder composition is defined above and may optionally additionally contain at least one representative from the group consisting of phenolic resin and epoxy resin, melamine resin, urea-formaldehyde resin and thermoplastic polymer. The binder may also contain a halogen-free and boron-free flame retardant.

In this aspect of the invention, the filter medium may have a grammage of 60 g/m$^2$ - 250 g/m$^2$; and/or a thickness of 0.2 mm - 2.2 mm; and/or an air permeability of 50 L/(m$^2$s) - 3,000 L/(m$^2$s); and/or a fire-retardant effect according to DIN 53438 1984 of at least K1 and at least F1; and/or a wash-out resistance according to DIN 53438 1984 of at least K1 and at least F1. The measurement methods for the grammage, thickness and air permeability are given above.

The filter medium according to this aspect of the invention may have a pre-filter layer on the inflow side. The pre-filter layer may comprise a melt-blown nonwoven, a spun-bonded nonwoven, a dry-laid staple fiber nonwoven, a wet-laid nonwoven, a glass-fiber nonwoven, a fabric or a foam.

## Filter element

The invention also relates to a filter element comprising the filter medium according to the invention. The filter element may be suitable for one or more of the following: ventilation, air conditioning technology for buildings and/or vehicle interiors, air supply of engines, optionally internal combustion engines, as well as oil filtration.

The filter element may be in the form of a tube, pocket or pouch. In the filter element, the filter medium can be one or more of embossed, folded, corrugated in the transverse direction, and fluted in the longitudinal direction.

## Paper

The invention also relates to a paper comprising a resin binder composition, wherein the resin binder composition comprises a lignin modified phenolic resin, and wherein when the paper is subjected to the leaching test, it loses:

2.5% or less by mass relative to the total mass of the paper prior to the test; and/or
10% or less by mass relative to the total mass of the resin binder composition prior to the test.

The paper may include one or more selected from kraft paper, cardboard, tissue paper, filter paper and newsprint. In one embodiment, the paper is not kraft paper. In another embodiment, the paper is not filter paper.

The disclosures above concerning the resin binder composition, lignin modified phenolic resin and leaching test apply accordingly to the paper of the invention.

## Methods of preparing the filter medium

The invention also relates to a method of preparing the filter medium of the invention comprising the step of contacting the at least one layer with the resin binder composition comprising the lignin modified phenolic resin. The filter medium, contacting step, at least one layer, resin binder composition and the lignin modified phenolic resin are defined above.

The resin binder composition used in the contacting step may be different from that in the filter medium, as it preferably additionally comprises a solvent. The solvent may be removed in the optional drying step. The solvent is preferably water or an organic solvent or a mixture thereof, preferably wherein the organic solvent is an alcohol, and more preferably methanol and most preferably the solvent is a methanol-water mixture. The dry weight of the resin binder composition may be 5 - 70 mass%, preferably 10 - 20 mass% on the basis of the solvent and the resin binder composition.

The resin binder composition used in the contacting step may be different from that in the filter medium, as it preferably additionally comprises a crosslinking agent. The crosslinking agent may no longer be present in the filter medium, as it may react with the resin components including the lignin modified phenolic resin during the optional curing step. The crosslinking agent may be used in 0.1 - 5 wt%, preferably 1 - 4 wt% based on the mass of the resin binder composition. The crosslinking agent may be a polyamine such as a diamine, preferably hexamine and/or melamine.

The resin binder composition used in the contacting step may be different from that in the filter medium, as the resins including the lignin modified phenolic resin may react e.g. by further crosslinking during the optional curing step.

In the method of the invention, the resin binder composition may be contacted with the at least one layer using known techniques, such as spraying, dipping, roller application, foam application, or dusting. A saturating size press or other conventional means may be used to apply the resin binder composition to the at least one layer, such as curtain coaters, metered press coaters, foam bonders, graver rolls, dip and nip, doctorate transfer rolls, rod coaters, and spray coaters. When the resin binder composition is applied in liquid form (as it is the case for example by dipping) the resin binder composition preferably comprises a solvent. Preferred solvents are water, organic solvents or mixture thereof. Among the organic solvents, alcohols can be mentioned such as methanol or ethanol, more preferably methanol and most preferably the solvent is a methanol-water mixture.

The method optionally comprises the step of drying the contacted layer where the resin binder comprises a solvent. The drying step removes some or all of the solvent. The drying step may be carried out by heating the layer which has been contacted with the resin binder at a temperature in the range of from 30°C below the boiling point of the solvent to 30°C above the boiling point of the solvent (both measured at 101325 Pascals) in a ventilated environment. The drying step may be carried out for 1 minute to 1 hours, preferably less than 10 minutes.

The method optionally comprises the step of curing the contacted layer after or instead of the drying step. The curing step leads to crosslinking of the resin. The curing step may be carried out by heating the layer which has been contacted with the resin binder composition, and optionally dried, at a temperature in the range of 100 - 200°C, preferably 140 - 180°C. Preferably the curing step is carried out for 1 to 30 minutes, preferably 5 to 15 minutes. Most preferably, the method of the invention involves curing at 165°C for 10 minutes.

The method of preparing a filter medium according to the invention may further comprise the step of reacting together phenol, formaldehyde, and lignin to obtain the lignin modified phenolic resin. The lignin, phenol and formaldehyde and the reaction together of these components are defined above. The lignin may be present in the reaction in an amount of greater than 15% by mass, preferably greater than 25% by mass, preferably greater than 35%, preferably 50% or greater by mass based on the total mass of the phenol, formaldehyde and lignin.

The invention may further comprise a method of preparing a filter element of the invention as defined above. This method comprises introducing the filter medium of the invention into a filter unit. The filter unit may be a ventilation unit, an air conditioning unit for buildings and/or vehicle interiors, an air supply unit for engines, optionally an air supply unit for an internal combustion engine, as well as an oil filter unit.

The method of preparing a filter element of the invention may also comprise the methods of preparing the filter medium of the invention as defined above, prior to the method of preparing the filter element.

The invention also relates to the use of the filter medium or filter element according to the invention for fluid filtration. In a preferred embodiment, the filtration is air filtration, optionally in one or more selected from ventilation, air conditioning for buildings and/or vehicle interiors, air supply for engines, preferably air supply for internal combustion engines or oil filtration.

## Examples

Hereinbelow, the present invention will be described in more detail with reference to the examples. However, the present invention is not limited to the following Examples.

## <u>Experimental section</u>

**Lignin density measurement:**

Lignin was dried at 105°C for 24 hours. The density was measured using Helium Pyknometer according to DIN 66137-2:2019-03. The results are shown below:
Lignin for Lignin modified Phenolic resin:
1.332 g/cm$^3$ (Helium Pyknometer DIN 66137-2:2019-03)

**Resin 1**

Resin 1 is PF-22 EKO obtained from Lerg SA.

**Properties of resin 1**

Resin 1 is a lignin modified phenolic resin in which the content of the lignin is 26.5 weight% based on solids. The lignin therein has the density measured above. The properties were assessed using the methods below and are reported in table 1.

**Table 1**

| Nr. | Parameter | Unit | Result | Standard |
|---|---|---|---|---|
| 1. | Viscosity at 20°C | [mPas] | 380 | EN ISO 12058-1:2018 |
| 2. | Dry weight in methanol[1] | [%] | 58.0 | EN ISO 3251:2019 |
| 3. | B-transformation time at 130°C | [min.] | 7'20" | EN ISO 8987:2007 Met. A |
| 4. | Content Free FORMALDEHYDE | [%] | 0.09 | EN ISO 11402:2006 |
| 5. | Content free PHENOL | [%] | 1.85 | EN ISO 8974:2002 |

1) Measured at 135 °C / 1 hour/3g

**Comparative resin 1**

Comparative resin 1 is a standard phenolic resin.

**Properties of comparative resin 1**

Comparative resin 1 is a phenolic resin. The properties were assessed using the methods below and are reported in table 2.

**Table 2**

| Nr. | Parameter | Unit | Result | Standard |
|---|---|---|---|---|
| 1. | Viscosity at 20°C | [mPas] | 250 - 600 | EN ISO 12058-1:2018 |
| 2. | Dry mass | [%] | 62 - 65 | EN ISO 3251: 2019 |
| 3. | B-transformation time at 130°C [2] | [Min.] | 3 - 6 | EN ISO 8987: 2007 Met. A |
| 4. | Content Free Formaldehyde [1] | [%] | under 0.1 | EN ISO 11402:2006 |
| 5. | Content Free Phenol | [%] | under 2.0 | PL-W-O15 |
| 1) Method with Hydroxylaminhydrochloride 2), 130°C, 0.5g | | | | |

**Measurements of Mn, Mn, and MWD for resin 1 and comparative resin 1**

Analysis conditions Eluent: 0.1 M aqueous KOH
Columns: MCX, 5 μm, guard column, ID 8.0 mm x 50 mm
MCX, 5 μm, 1,000 Å, ID 8.0 mm × 300 mm
MCX, 5 μm, 1,000 Å, ID 8.0 mm × 300 mm
MCX, 5 μm, 1,000 Å, ID 8.0 mm × 300 mm

**Analysis conditions**

- Pump: Agilent 1260 Infinity isocratic pump
- Flow rate: 1.0 mL/min
- Injection system: Agilent 1260 Infinity Autosampler
- Injection volume: 100 μL
- Sample concentration: approx. 5.0 mg/mL
- Column temperature: 40 °C
- Detector: Agilent 1260 Infinity Refractive Index Detector (RID)
- Evaluation: Agilent WinGPC, Version 1.0

**Sample Preparation** Resin 1 and Comparative resin 1 were shaken before sampling to ensure they were homogeneous. A small amount of material was taken and precisely weighed on an analytical balance. The samples were then mixed with a defined amount of the eluent to create analysis solutions with a sample concentration of about 5.0 mg/mL. These mixtures were swirled for about three hours at room temperature in an automatic shaker to dissolve the sample components. Before injection, the analysis solutions were each filtered through a PTFE syringe filter with a nominal porosity of 1.0 $\mu$m.

**Calibration and Evaluation of Molar Mass** PSS molar mass standards (PSS 340 k, PSS 200 k, PSS 150 k, PSS 80 k, PSS 45 k, PSS 30 k, PSS 15 k, PSS 10 k, PSS 4.5 k, PSS 3.4 k, PSS 2 k, PSS 1 k, PSS 246) were measured under the same conditions as the analysis samples, and a conventional calibration curve was created based on the results. The calculation of the molar mass distribution and its averages was done computationally using the so-called slice method, based on the PSS calibration.

**Table 3**

| Resin | $M_n$ [g/mol] | $M_w$ [g/mol] | ($M_w/M_n$) |
|---|---|---|---|
| Resin 1 | 271 | 2600 | 9.58 |
| Comparative resin 1 | 260 | 1830 | 7.05 |

**Example 1: Synthesis and properties of filter media 1-1 to 1-3 and comparative filter media 1-1 to 1-3**

To make filter medium 1-1 and comparative filter medium 1-1, a layer (standard base paper containing 100% cellulose) was saturated with the resin 1 or comparative resin 1 using a lab foulard and dried for 5 minutes at 70°C in a conveyor oven. Immediately after drying, the properties were determined (vp in the tables below). The filter media were then cured at 165°C for 10 minutes. Properties determined thereafter are given as "np" in the table 4 below.

The same process was followed to make filter medium 1-2 and comparative filter medium 1-2 having the properties in the table 5 below respectively, except that the layer was a Cellulose/PET Fiber Blend.

The same process for filter medium 1-1 and comparative filter medium 1-1 was again followed to make filter medium 1-3 and comparative filter medium 1-3 having the properties in the table 6 below respectively, except that the layer was a Cellulose/PET Fiber Blend.

In the following tables 4 to 6, the properties of filter media are compared with the comparative filter media. The filter media according to the invention achieve similar properties to the standard comparative filter media, while achieving improved sustainability.

**Table 4 (Engine Air Filter Media)**

| Test | grammage | thickness (0,1 bar) | bursting strength (1) vp | bursting strength (1) np | air permeability (2) | maximum pore | many pores | width related bending stiffness 15° dry MD (3) vp | width related bending stiffness 15° dry CD (3) vp | width related bending stiffness 15° dry MD (3) np | width related bending stiffness 15° dry CD (3) np | width related bending stiffness 15° wet MD (3) np | width related bending stiffness 15° wet CD (3) np | acetone extract vp | acetone extract np | bursting strength after 24h at 160°C | flame retardant test (surface) | flame retardant after washing out |
|---|---|---|---|---|---|---|---|---|---|---|---|---|---|---|---|---|---|---|
| units | g/m² | mm | kPa | kPa | L/(m²s) | µm | µm | cNmm | cNmm | cNmm | cNmm | cNmm | cNmm | -% | -% | kPa | mm | mm |
| Filter medium 1-1 | 131 | 0.51 | 287 | 315 | 157 | 50 | 39 | 380.0 | 177.0 | 492.5 | 230.2 | 87.8 | 41.3 | 6.5 | 0.0 | 188 | 84 | 92 |
| Comparative filter medium 1-1 | 131 | 0.49 | 274 | 294 | 163 | 46 | 38 | 460.7 | 232.8 | 572.1 | 289.9 | 115.7 | 61.7 | 4.2 | 0.0 | 208 | 71 | 93 |

**Table 5  (Engine Air Filter Media)**

| Test | grammage | thickness (0,1 bar) | bursting strength (1) vp | bursting strength (1) np | air permeability (2) | maximum pore | many pores | width related bending stiffness 15° dry MD (3) | width related bending stiffness 15° dry CD (3) | width related bending stiffness 15° dry MD (3) | width related bending stiffness 15° dry CD (3) | width related bending stiffness 15° wet MD (3) | width related bending stiffness 15° wet CD (3) | acetone extract vp | acetone extract np | bursting strength after 24h at 160°C | flame retardant test (surface) | flame retardant after washing out |
|---|---|---|---|---|---|---|---|---|---|---|---|---|---|---|---|---|---|---|
| units | g/m² | mm | kPa | kPa | L/(m²s) | µm | µm | cNmm | cNmm | cNmm | cNmm | cNmm | cNmm | % | % | kPa | mm | mm |
| Filter medium 1-2 | 102.00 | 0.36 | 265.00 | 281.00 | 174.00 | 53.00 | 41.00 | 206.0 | 113.5 | 252.9 | 136.8 | 47.6 | 27.8 | 4.23 | 0.51 | 205.00 | 73.00 | 94.00 |
| Comparative filter medium 1-2 | 102 | 0.37 | 259 | 275 | 165 | 46 | 39 | 211.7 | 115.6 | 253.3 | 139.0 | 49.5 | 30.5 | 7.1 | 0.0 | 203 | 79 | 81 |

## Table 6 (Oil Filter Media)

| Test | grammage | total thickness (0,1bar) | material thickness of corrugated papers | corrugation depth (Keyence) | air permeability at 200Pa (2) | max. pore | many pores | bursting strength (1) | bursting strength after curing (1) |
|---|---|---|---|---|---|---|---|---|---|
| Abbreviation | FM | GESD (0,1bar) | D | Riti | LD | gr. Pore | v. Poren | BRF | BFR NP |
| units | g/m² | mm | mm | mm | L/(m²s) | µm | µm | kPa | kPa |
| Filter medium 1-3 | 232 | 1.21 | 0.87 | 0.31 | 340 | 63 | 54 | 231 | 537 |
| Comparative filter medium 1-3 | 232 | 1.12 | 0.82 | 0.3 | 351 | 63 | 55 | | 534 |

(1) according to Mullen (7.3cm² test surface)  (2) with textest at 200 Pa  (3) 15mm band size

**Example 2: leaching properties of filter media**

Resin formulations 1-5 were prepared by mixing the components in the following table 7. Only resin 4 is according to the invention. As can be taken from the table, the resin components are present in solution in methanol, and the numbers in the columns for formulations 1-5 give the wet weights of these components in solution in methanol. These formulations were then diluted with methanol or a mixture of methanol and water as specified in the last two rows of the table to give resin binder compositions 1-5, each with a solid content of 13.5 wt% relative to the whole resin binder composition.

To make filter media 2-1 to 2-5, a standard base paper was saturated with these resin binder compositions 1 - 5 to achieve a dry weight of the resin binder composition of 25wt% (based on the total mass of the dry weight of the resin binder composition and the base paper) using a lab foulard and dried for 5 minutes at 70°C in a conveyor oven. Immediately after drying, the filter media were cured at 165°C for 10 minutes.

The filter media were weighed, and subsequently the filter media were completely submerged and aged for 24 h in 25 °C deionized water. The water was completely changed after 1, 4, and 7 h. The amount of water used for the leaching test was 5 liters per square meter of filter media. After 24 hours, the filter media were removed from the water and dried for 1h at 100°C. After drying, the masses of the filter media were determined, and the weight loss was calculated.

In the following table 8, the leaching properties of filter media 2-1 to 2-5 are compared. As can be taken from the table, the leaching properties of the filter medium according to the invention is significantly improved relative to filter media 2-1 to 2-3 using alternative phenolic resins containing lignin. It is similar to filter medium 2-5 which does not have the improved sustainability of the invention.

**Table 7**

| formulation: | Wt% in Methanol | 1** | 2** | 3** | 4 | 5** |
|---|---|---|---|---|---|---|
| Comparative resin 1 | (63%) | 11.6 | 7.8 | 11.6 | / | 10.0 |
| Crosslinker I | (36%) | 3.0 | 3.0 | / | / | / |
| Crosslinker II | (8%) | / | / | 13.5 | / | / |
| Resin 1 | (58%) | / | / | / | 10.0 | / |
| Lignin | (100%) | 3.6 | 6.0 | 3.6 | / | / |
| solvent (Vol%): | MeOH | 76 | 59 | 73 | 82 | 100 |
| | Water | 24 | 42 | 27 | 18 | / |

** These resins are not used to make filter media according to the invention

EP 4 741 034 A1

**Table 8**

| Medium | | 2-1** | | 2-2** | | 2-3** | | 2-4 | | 2-5** | |
|---|---|---|---|---|---|---|---|---|---|---|---|
| resin content vp* | % | 25.8 | 25.7 | 24.1 | 24.1 | 25.6 | 25.1 | 25.3 | 24.7 | 25.7 | 25.7 |
| grammage after curing, dry | g/m$^2$ | 119.4 | 119.2 | 117.8 | 117.9 | 118.4 | 117.6 | 118.4 | 117.6 | 117.0 | 117.8 |
| grammage after washing out, dry | g/m$^2$ | 116.0 | 115.5 | 113.3 | 114.1 | 115.2 | 114.1 | 117.0 | 116.2 | 115.4 | 116.5 |
| total mass loss | -% | 2.85 | 3.10 | 3.82 | 3.22 | 2.70 | 2.98 | 1.18 | 1.19 | 1.37 | 1.10 |
| total mass loss | g/m2 | 3.40 | 3.70 | 4.50 | 3.80 | 3.20 | 3.50 | 1.40 | 1.40 | 1.60 | 1.30 |
| mass of resin | | 30.8052 | 30.6344 | 28.3898 | 28.4139 | 30.3104 | 29.5176 | 29.9552 | 29.0472 | 30.069 | 30.2746 |
| mass loss of resin | -% | 11.0371 | 12.0779 | 15.8508 | 13.3737 | 10.5574 | 11.8573 | 4.67365 | 4.81974 | 5.32109 | 4.29403 |

*vp = before curing
** These resins are not used to make filter media according to the invention

**Claims**

1. A filter medium comprising:

    at least one layer and a resin binder composition,
    wherein the resin binder composition comprises a lignin modified phenolic resin,
    wherein when the filter medium is subjected to the leaching test, it loses:

        2.5% or less by mass relative to the total mass of the filter medium prior to the test; and/or
        10% or less by mass relative to the total mass of the resin binder composition prior to the test.

2. The filter medium according to claim 1,

    a) wherein the at least one layer is fibrous and optionally comprises 10 to 100% by weight of natural fibers and 0 to 90% by weight of synthetic and/or inorganic fibers, based on the total weight of the fibers in the layer, optionally wherein the synthetic fibers are polyester fibers, and/or
    b) wherein the filter medium comprises 5 to 40% by weight of the resin binder composition, based on the total weight of the filter medium.

3. The filter medium according to any previous claim,
    wherein the at least one layer is a wet-laid layer.

4. The filter medium according to any previous claim, wherein the at least one layer has a full-life efficiency equal to or higher than 90.00%.

5. The filter medium according to any previous claim, wherein

    i) the amount of formaldehyde released is less than 0.1 g/kg; and/or
    ii) the bursting strength is 140-1000kPa; and/or
    iii) the bursting strength after 24h at 160°C is 130 - 1000 kPa; and/or
    iv) the air permeability is 3 - 800 L/(m$^2$s); and/or
    v) the flame retardant classification of F1 is achieved with DIN53438 1984 both before and after the leaching test.

6. The filter medium of any previous claim, wherein the lignin modified phenolic resin is obtained by reacting together phenol, formaldehyde, and lignin.

7. The filter medium of claim 6,

    i) wherein the lignin has a density of 1.25 - 1.45 g/cm$^3$; and/or
    ii) wherein the lignin is present in the reaction in an amount of greater than 15% by mass based on the total mass of the phenol, formaldehyde, and lignin.

8. The filter medium of any previous claim, wherein the filter medium is obtained by contacting the at least one layer with the resin binder composition, optionally wherein:

    i) in the contacting step the resin binder composition comprises in addition to the lignin modified phenolic resin at least one of a solvent, a crosslinking agent, a polymer based on acrylic esters, and a flame retardant; and/or
    ii) a drying step is carried out after the contacting step; and/or
    iii) a curing step is carried out after the contacting step and/or the drying step.

9. The filter medium according to any previous claim, wherein the lignin modified phenolic resin

    i) has a viscosity at 20°C of 250 - 600 mPas; and/or
    ii) has a content of free formaldehyde of less than 0.1 mass% on the basis of the lignin modified phenolic resin; and/or
    iii) has a content of free phenol of less than 2 mass% on the basis of the lignin modified phenolic resin; and/or
    iv) has a B-transformation time at 130°C of 3 - 8 minutes; and/or
    v) has a weight average molecular weight of 500 - 5000 g/mol; and/or

vi) has a number average molecular weight of 150 - 350 g/mol; and/or
vii) has a molecular weight distribution of 5 - 12.

10. A filter element comprising the filter medium according to any of the previous claims.

11. A paper comprising a resin binder composition,
wherein the resin binder composition comprises a lignin modified phenolic resin, and wherein when the paper is subjected to the leaching test, it loses:

2.5% or less by mass relative to the total mass of the paper prior to the test; and/or
10% or less by mass relative to the total mass of the resin binder composition prior to the test.

12. A method of preparing a filter medium according to any of claims 1-9, comprising the steps of

i) contacting the at least one layer with the resin binder composition comprising the lignin modified phenolic resin; and
ii) optionally drying the contacted layer; and/or
iii) optionally curing the contacted layer.

13. The method of preparing a filter medium according to claim 12, further comprising the step of reacting together phenol, formaldehyde, and lignin to obtain the lignin modified phenolic resin.

14. A method of preparing a filter element according to claim 10, comprising introducing the filter medium according to any of claims 1-9 into a filter unit.

15. Use of the filter medium or filter element according to any of claims 1 - 10 for air filtration.

**Amended claims in accordance with Rule 137(2) EPC.**

1. A filter medium comprising:

at least one layer and a resin binder composition,
wherein the resin binder composition comprises a lignin modified phenolic resin,
wherein when the filter medium is subjected to the leaching test defined in the description, it loses:

2.5% or less by mass relative to the total mass of the filter medium prior to the test; and/or
10% or less by mass relative to the total mass of the resin binder composition prior to the test;
wherein the lignin modified phenolic resin is obtained by reacting together phenol, formaldehyde, and lignin.

2. The filter medium according to claim 1,

a) wherein the at least one layer is fibrous and optionally comprises 10 to 100% by weight of natural fibers and 0 to 90% by weight of synthetic and/or inorganic fibers, based on the total weight of the fibers in the layer, optionally wherein the synthetic fibers are polyester fibers, and/or
b) wherein the filter medium comprises 5 to 40% by weight of the resin binder composition, based on the total weight of the filter medium.

3. The filter medium according to any previous claim,
wherein the at least one layer is a wet-laid layer.

4. The filter medium of claim 1,

i) wherein the lignin has a density of 1.25 - 1.45 g/cm$^3$; and/or
ii) wherein the lignin is present in the reaction in an amount of greater than 15% by mass based on the total mass of the phenol, formaldehyde, and lignin.

5. The filter medium of any previous claim, wherein the filter medium is obtained by contacting the at least one layer with the resin binder composition, optionally wherein:

i) in the contacting step the resin binder composition comprises in addition to the lignin modified phenolic resin at least one of a solvent, a crosslinking agent, a polymer based on acrylic esters, and a flame retardant; and/or
ii) a curing step is carried out after the contacting step, wherein the curing is carried out at a temperature in the range of 100 - 200°C.

6. The filter medium according to any previous claim, wherein the lignin modified phenolic resin

   i) has a viscosity at 20°C of 250 - 600 mPas when measured using EN ISO 12058-1:2018; and/or
   ii) has a content of free formaldehyde of less than 0.1 mass% on the basis of the lignin modified phenolic resin when measured using EN ISO 11402:2006; and/or
   iii) has a content of free phenol of less than 2 mass% on the basis of the lignin modified phenolic resin when measured using EN ISO 8974:2002; and/or
   iv) has a B-transformation time at 130°C of 3 - 8 minutes when measured using EN ISO 8987:2007 Met. A; and/or
   v) has a weight average molecular weight of 500 - 5000 g/mol when measured using the method in the description; and/or
   vi) has a number average molecular weight of 150 - 350 g/mol when measured using the method in the description; and/or
   vii) has a molecular weight distribution of 5 - 12 when measured using the method in the description.

7. A filter element comprising the filter medium according to any of the previous claims.

8. A method of preparing a filter medium according to any of claims 1 - 6, comprising the steps of

   i) reacting together phenol, formaldehyde, and lignin to obtain the lignin modified phenolic resin;
   ii) contacting the at least one layer with the resin binder composition comprising the lignin modified phenolic resin; and
   iii) optionally curing the contacted layer, wherein the curing is carried out at a temperature in the range of 100 - 200°C.

9. A method of preparing a filter element according to claim 7, comprising introducing the filter medium according to any of claims 1 - 6 into a filter unit.

10. Use of the filter medium or filter element according to any of claims 1 - 7 for air filtration.

| | Europäisches Patentamt |
|---|---|
| | European Patent Office |
| | Office européen des brevets |

# EUROPEAN SEARCH REPORT

**Application Number**

EP 24 21 1769

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2016/098667 A1 (HARIMA CHEMICALS INC [JP]; OSAKA MUNICIPAL TECH RES INST [JP]) 23 June 2016 (2016-06-23) * page 3, paragraph 5; claims 1,5; example 1 * ----- | 1,2,4-13 | INV. B01D39/16 B01D39/20 |
| X | JP 2023 532785 A (MUNKSJOE AHLSTROM OYJ, AHLSTROM OYJ) 31 July 2023 (2023-07-31) * paragraphs [0022], [0042] - [0043], [0068]; claims 1,4,7; example 9 * ----- | 1-5, 7-12,14, 15 | |
| X | JP 2022 147272 A (AICA KOGYO CO LTD) 6 October 2022 (2022-10-06) * paragraphs [0022], [0026], [0028]; example 1 * ----- | 1,11,12 | |

**TECHNICAL FIELDS SEARCHED (IPC)**

B01D

The present search report has been drawn up for all claims

| Place of search | Date of completion of the search | Examiner |
|---|---|---|
| The Hague | 25 March 2025 | Artos Fernández, V |

EPO FORM 1503 03.82 (P04C01)

EP 4 741 034 A1

## ANNEX TO THE EUROPEAN SEARCH REPORT
## ON EUROPEAN PATENT APPLICATION NO.

EP 24 21 1769

This annex lists the patent family members relating to the patent documents cited in the above-mentioned European search report.
The members are as contained in the European Patent Office EDP file on
The European Patent Office is in no way liable for these particulars which are merely given for the purpose of information.

25-03-2025

| Patent document cited in search report | Publication date | Patent family member(s) | Publication date |
|---|---|---|---|
| WO 2016098667 A1 | 23-06-2016 | JP WO2016098667 A1 | 21-09-2017 |
| | | TW 201628861 A | 16-08-2016 |
| | | WO 2016098667 A1 | 23-06-2016 |
| JP 2023532785 A | 31-07-2023 | BR 112022026992 A2 | 07-03-2023 |
| | | CN 115884818 A | 31-03-2023 |
| | | EP 3936209 A1 | 12-01-2022 |
| | | EP 4178706 A1 | 17-05-2023 |
| | | EP 4434604 A2 | 25-09-2024 |
| | | ES 2992688 T3 | 16-12-2024 |
| | | JP 2023532785 A | 31-07-2023 |
| | | KR 20230036111 A | 14-03-2023 |
| | | PL 4178706 T3 | 04-11-2024 |
| | | RS 65992 B1 | 31-10-2024 |
| | | US 2023271123 A1 | 31-08-2023 |
| | | WO 2022008614 A1 | 13-01-2022 |
| JP 2022147272 A | 06-10-2022 | NONE | |

EPO FORM P0459

For more details about this annex : see Official Journal of the European Patent Office, No. 12/82

**EP 4 741 034 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2022008614 A1